# EUROPEAN PATENT APPLICATION

(11) **EP 0 724 099 A1**
(43) Date of publication of application: **31.07.1996**
(21) Application number: 96850010.8
(22) Date of filing: 24.01.1996
(51) Int. Cl.: F16K 27/07

(54) **A balanced bottom valve**

(30) Priority: 25.01.1995 SE 9500257
(71) Applicant: F. WENNSTRÖM AB, S-736 21 Kungsör (SE)
(72) Inventor: Brehmer, Roland, S-710 41 Fellingsbro (SE)
(74) Representative: Sundström, Per Olof

(57) **Abstract**

A balanced bottom valve for emptying and filling a liquid tank, particularly a fuel tank and more particularly the fuel tank of a gasoline truck, through an opening in the bottom of the tank. The valve is placed inside the tank adjacent its bottom opening and includes a valve seat (314) which defines a throughflow opening, a valve plate (320) which can be moved to and from a seat shielding position, spring means (341, 342) which function to bias the valve plate (320) to a closed seat sealing position, and a fluid-driven piston-cylinder unit (330, 323, 324) which functions to lift the valve plate (320) against the force of the spring means (341, 342) when activated. The unit includes a cylinder (323, 350) which houses a piston (330) which is firmly connected to a rod (313). The bottom valve is characterized in that the rod (313) extends through the valve plate (330) and is fixedly mounted so that the valve plate (320) is sealingly connected with the cylinder mantle; in that the spring means (341, 342) acts between the valve plate (320) and the piston firmly connected to the rod (313) of the piston-cylinder unit; and in that the valve is located inside the tank.

## Description

The present invention relates to a balanced bottom valve for emptying and filling a liquid-carrying tank, particularly a fuel tank and more particularly a fuel tank of a petrol lorry or gasoline truck, via a bottom opening in the tank.

Balanced bottom valves of the kind concerned are known in practice. The valve designated PBV 100/100 FL 90° from Alfons Haar Maschinenbau GmbH & Co., D-2000 Hamburg 53 (Lurup), Germany, is an example of one such valve.

The actual bottom valve of this known bottom valve construction is placed in the tank interior, adjacent the tank outlet opening. The valve includes a valve seat which surrounds the tank opening, a valve plate which is displaceable from sealing abutment with the valve seat, spring means which bias the valve plate towards a closed position, and an air piston-cylinder unit which when activated functions to lift the valve plate against the force of said spring means. The bottom valve is positioned in a conventional manner, by virtue of the valve plate and a valve cup or dish together defining a space on that side of the valve plate which faces towards the interior of the tank. This space is in fluid communication with the space on the other side of the valve plate. The flat area of the valve plate on which fluid pressure acts is larger on the side of the valve plate that faces towards the tank interior than the area subjected to fluid pressure on the opposite side of the plate.

The balancing effect thus achieved prevents the bottom valve from being opened in response to an increase in pressure in the tank outlet.

A valve of this known kind is supported entirely in a cage bolted firmly to the tank around the tank outlet opening. The bolts do not only take up the pressure exerted by the liquid but also the force exerted by the spring means when the valve is closed.

One problem encountered with gasoline trucks that are fitted with such known bottom valves reside in the lack of ability to verify whether or not the tank fitted with said valve has been emptied. Certain gasoline trucks include a conduit section which extends from the bottom valve to a closure valve distanced therefrom. This conduit section is able to accommodate from 70 to 80 litres of liquid. This creates some degree of uncertainty on the part of the person receiving a fuel delivery, because even though the person receiving the delivery is able to establish that the tank is empty, by inspection or with the aid of a sensor mounted in the bottom region of the tank, 70 to 80 litres of fuel may nevertheless remain in this conduit section. The problem is accentuated by the fact that some oil companies indicate the amount delivered to the gasoline truck by filling the tank/tank compartment to a measured "checked" level.

Consequently, when seen against this background, two sensors are required, in principle, to ensure that the liquid volume of the tank/tank compartment has truly been delivered, i.e. one sensor which detects that the actual tank is empty, and a further sensor which detects that the conduit is empty in the vicinity of the closure valve.

Another problem is that liquid enclosed between the bottom valve and the closure valve may become hot and therewith be under high pressure. This high pressure may block the balanced bottom valve, therewith necessitating liquid to be released through the medium of the stop valve in order to lower the pressure. The release of liquid in this way normally has a detrimental effect on the environment.

Another drawback with the known type of bottom valve is that the valve is forcibly manoeuvered with the aid of a spindle which is screwed axially through a valve opening to effect displacement of the valve plate. This opening may consist in a screw-threaded hole normally sealed with a screw provided with a sealing element. This arrangement, however, is prone to leakage. The fluid-cylinder unit of the bottom valve, i.e. the pressure-air cylinder, normally works with an air pressure delivered by the compressed air system of the vehicle, i.e. an air pressure in the order of 6-7 bars.

One object of the invention is to provide a bottom valve whose attachment means will be subjected to lower loads than the earlier known valve. A further object is to utilize the characteristic features of the inventive valve to allow the movable fluid cylinder to carry a float which detects the level of liquid in the tank and coacts with a sensor therein.

Another object of the invention is to provide a safety valve with which overpressure in the tank outlet conduit is read-off automatically with a small flow, so as to relieve a rise in pressure by leading a small amount of liquid into the tank interior.

Still another object of the invention is to provide a fluid-cylinder drive system which, when necessary, enables the standard compressed-air system of a gasoline truck to be used to forcibly open the bottom valve with a force which is substantially greater than the force normally developed by the cylinder in manoeuvering the valve plate, without needing to establish an opening in a wall in the liquid system.

The aforesaid primary object is achieved with the bottom valve defined in Claim 1.

The other objects are achieved with the inventive bottom valve according to Claim 1 or one of the dependent Claims.

An important feature of the invention is that the actual operating piston-cylinder of the bottom valve is mounted so that its piston remains stationary while the cylinder is moved axially when the piston-cylinder unit is activated.

The structural design of the valve enables the displaceable fluid cylinder to carry a float guide. The float may thus include a generally vertical guide stem guided for axial movement in the, cylinder-mounted guide. The float will therewith follow the level of liquid in the tank and influence a sensor placed on the tank bottom. By enabling the float stem to move axially through the guide to a limited extent and by providing the float stem with an abutment or stop means which restricts downward movement of the float in relation to the guide, the abutment can be placed in a position on the float stem which will prevent the float from influencing the sensor when the bottom valve is open and the tank is completely empty. This means that the tank must first be emptied and the valve then closed before the float is able to cause the sensor to produce a signal to the effect that the tank is empty. Thus, the operator of a gasoline truck can obtain no indication that the tank is empty but that the conduit section upstream of the closure valve is filled with liquid.

The inventive bottom valve may also be provided with sensors which detect the open and closed state of the bottom valve.

One advantage afforded by the float/sensor system of the inventive bottom valve arrangement is that the stop means on the float stem can be moved up through a distance which corresponds at least to the length of stroke of the valve, so that the float will follow the level of liquid in the tank and thus be able to influence its sensor irrespective of whether the bottom valve is open or closed.

The invention will now be described in more detail with reference to an exemplifying embodiment thereof and also with reference to the accompanying drawings, in which
Fig. 1 is an axial section view of a bottom valve mounted in a bottom opening of a liquid tank;
Fig. 2 illustrates schematically a liquid tank whose bottom outlet is fitted with an inventive bottom valve which connects with a conduit section fitted with a closure valve; and
Fig. 3 illustrates schematically a pressure reduction valve and a shunt conduit for the operating piston-cylinder arrangement of the bottom valve.

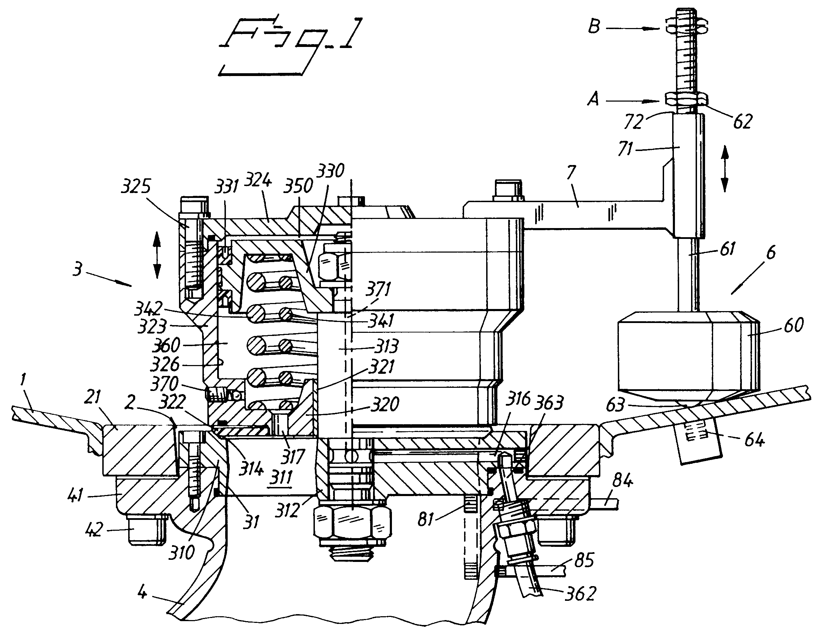

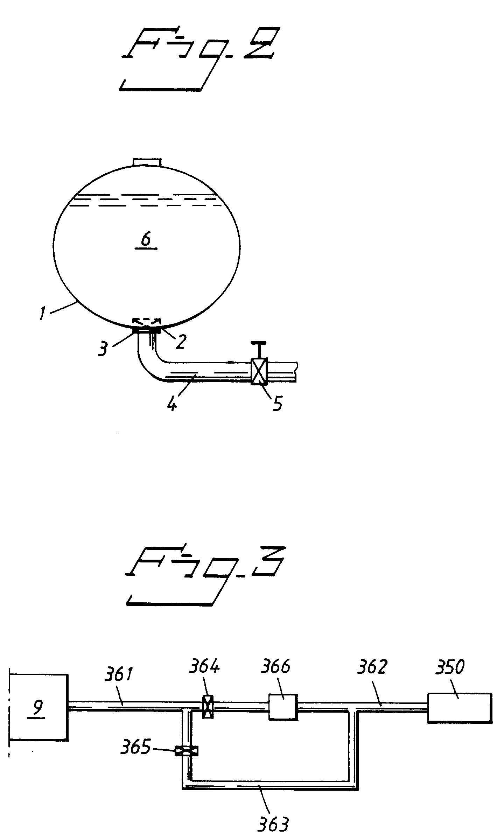

Fig. 2 is a schematic cross-sectional view of a tank compartment of a gasoline truck, wherein the tank 1 has a bottom opening 2, a valve 3 fitted in the bottom opening, and a pipe 4 connected to the valve. The pipe 4 is fitted with a closure valve 5. Liquid 6 is delivered to and tapped from the tank 1 through the valve 3.

With reference to Fig. 1, it will be seen that the opening 2 is defined by a transit ring 21, or lead-through, fitted to the bottom of the tank. The end part of the pipe 4 has a flange 41 which fits against the ring 21, wherein bolts 42 pass through the flange 41 and are screwed into the ring 21. The end of the pipe 4 also carries a valve-seat ring 31 which is screwed to the pipe 4. The ring 31 comprises a number of generally radial spokes 311 which connect with a central hub 312. A rod 313 is mounted centrally in the hub 312.

The ring 31 defines a valve seat 314. A valve plate 320 has a central guide opening 321 into which the rod 313 fits. The valve plate 320 is provided at its periphery with a sealing ring 322 which functions to seal against the seat 314. The plate 320 is provided at its periphery with a generally cylindrical mantle 323 whose upper end includes a wall 324 which is attached to the mantle 323 by means of a screw joint 325.

A piston 330 is attached to the upper end of the rod 313. Fitted circumferentially around the piston 330 is a piston seal 331 which extends in sealing contact with the cylindrical in a wall 326 of the mantle 323. Pressure springs 341, 342 are disposed axially around the rod 313 and act between the piston 330 and the valve plate 320.

The wall 324, the piston 330 and the mantle 323 define a variable volume chamber 350.

A compressed-air conduit 362 connects with a passageway 363 in the flange 41 and with a passageway 316 through a spoke 311 and exits in the hub 312, wherein the rod 313 has a peripheral groove and radial bores which connect the passageway 316 with an axially extending passageway 371 which exits in the chamber 350. It will be seen that compressed air introduced into the chamber 350 will move the wall 324, the mantle 323 and the valve plate 320 upwards, provided that the force generated by the compressed air in the chamber 350 is able to overcome the force exerted by the springs 341, 342 so as to open the valve 3 and therewith allow liquid to flow from the tank interior to the pipe 4, or in the opposite direction through the openings present between the outer ring 310, the inner ring 312 and the spokes 311 of the seating element 31.

The valve 3 is balanced so as to prevent rupturing of the tank should liquid be delivered at high pressure through the pipe 4. The valve is balanced by providing the valve plate 320 with an opening 317 in the vicinity of the through-flow openings of the seat element 31, so as to allow the liquid pressure in the pipe 4 to propagate to the spring chamber 360. In this regard, the effective cross-sectional area of the chamber 360 shall be greater than the downwardly facing area that lies proximal to the valve plate 320 and acted upon by the pressure of the liquid in the pipe 4. The difference between these areas thus establishes a force which tends to keep the valve plate 320 in sealing contact with the seat 314 irrespective of the pressure level in the pipe 4.

It will be seen that the attachment of the valve-seat element 31 is not affected by the valve springs 341, 342, therewith enabling the valve 3 to be fastened to the flange 41 on the pipe 4 with the aid of relatively weak fastener elements/bolts.

When filling the tank 1 through the pipe 4, it is possible that liquid will remain in the conduit section between the closure valve 5 and the bottom valve 3 (c.f. Fig. 2). If the liquid enclosed between the valves 3 and 5 becomes hot, it is liable to expand and therewith increase the pressure of the enclosed liquid volume. This pressure may become so high as to lock the balanced valve 3 in its closed state. Naturally, the pressure could be relieved by briefly opening the closure valve 5, although this would result in environmentally detrimental spillage, particularly when the liquid 6 is gasoline or some corresponding liquid.

According to the invention, a safety valve 370 is fitted in the cylindrical wall of the valve 3 and extends into the spring chamber 360. The valve 370 may have the form of a spring-loaded ball which seals against a seating, the force of the spring being adapted to enable the ball to lighten its engagement with the seating and therewith allow a small flow of liquid to pass from the chamber 360 and into the tank 6 when the pressure in the chamber 360, i.e. in the pipe 4, exceeds 10 bars, for instance.

Because the exposed parts of the valve 3 in the tank 1, the mantle 323 and the wall 324, are connected to the valve plate 320 and move together therewith, a carrier arm 7 may be conveniently mounted on, e.g., the wall 324 so as to accompany the valve plate 320 as it moves. The arm 7 carries a vertical guide sleeve 71. A float 6 includes a float body 60 and a float stem 61 which extends through the guide sleeve 71. The stem 61 is provided with stop means 62 above the sleeve 71. The stop means 62 is able to coact with an abutment 72 defined by the upper end of the sleeve 71. The float 60 may, for instance, be provided on its underside with a magnet 63, and a sensor 64 may be arranged to detect the magnet 63 when it is located in a position that corresponds to a completely empty tank 1.

When the stop means is located in the illustrated position A slightly above the abutment 72 when the valve 3 is closed and the magnet 63 on the bottom of the float 6 touches the tank bottom (can be sensed by the sensor 64), the effect is achieved whereby the valve 3 must be closed in order for the sensor 64 to be able to produce a signal to the effect that the float 6 is in its bottom position, i.e. that the tank 1 is empty. When the valve 3 is open, the stop means 62 coacts with the abutment 72 so as to hold the magnet 63 raised from the tank bottom and therewith unable to activate the sensor 64, even though the tank 1 is empty of liquid.

It is therefore made impossible for a tank operator to cheat when emptying the tank by closing the valve 5 when the tank 1 is emptied but while liquid remains in the pipe or conduit extending between the valves 3 and 5, with the aid of one single sensor 64.

Alternatively, the stop means 62 can be placed at the position B, so that when the float magnet 63 touches the bottom of the tank the distance between the stop means in position B and the abutment 72 will be greater than the length of stroke of the valve. This enables the sensor 64 to detect the empty state of the tank irrespective of whether the valve 3 is open or closed.

In the case of gasoline truck applications, the outlet 2 will have a diameter in the order of 100 mm, therewith enabling the compressed-air chamber 350 of the valve 3 to have a diameter in the order of 100 mm, even in those instances when it is desired to fit the valve 3 externally. Because the compressed-air chamber 350 has such a large area, an air pressure in the order of 3 bars will suffice to open the valve 3 against the force of the springs 341, 342.

However, in the case of automotive vehicles which include compressed-air operated equipment, thus including gasoline trucks, an air pressure of about 7 bars is normally used.

According to the invention, see Fig. 3, compressed air is taken from the compressed-air source 9 of the vehicle at the standard pressure, e.g. 7 bars, and delivered to an air conduit 361, through a pressure reduction valve 366, from which air having a pressure of 3 bars is introduced into the conduit 362 (c.f. Fig. 1) and from there to the compressed-air chamber 350. According to the invention, a shunt line 363 by-passes the pressure reduction valve 366 and closure valves 364, 365 are provided in respective conduits 361 and 363 so that an operator is able to choose to introduce into the chamber 350 compressed air at the system pressure of 7 bars, should it be necessary to forcibly open the valve, due to the valve 3 being stuck for some reason or other. The arrangement illustrated in Fig. 3 thus enables a top-opening force to be applied to the valve plate 320, this force being twice as great as the force normally used to activate the valve opening arrangement. One advantage with the inventive arrangement is that no additional transits are required through the wall of the pipe 4 in order to forcibly move the valve plate 320.

Fig. 1 is a schematic illustration of the valve 3 in the tank bottom, and is a sectional view which lies in a normal plane to the axis of the generally cylindrical tank 1. For the purpose of illustration, the float 6 and the arm 7 have been shown in the plane of Fig. 1. The person skilled in this art, however, will understand that the arm 7, the float 6, and the sensor 64 may conveniently be placed in a position which is rotated through 90° around the valve axis from the position shown in Fig. 1, so that the float 60 will indicate the level of liquid more accurately when reaching the deepest bottom part of the tank 1.

The open and closed states of the valve 3 can be indicated, for instance, with the aid of a magnet 81 carried by the valve plate 320, and by providing the pipe 4 with a sensor 84 which senses the proximity of the magnet 81 when the valve 3 is open and delivers a corresponding signal, and by providing a further sensor 85 in a position in the proximity of the magnet 81 which when the valve 3 is closed delivers a signal to this effect. It will be understood that the magnet-actuated sensors 84, 85 are merely examples of conceivable position indicators and that the same also applies to the elements 63 and the sensor 64 on the float 6.

## Claims

1. A balanced bottom valve for emptying and filling a liquid tank, particularly a fuel tank and more particularly the fuel tank of a gasoline truck, through a bottom opening in the tank, wherein the valve is placed inside the tank adjacent its bottom opening and includes a valve seat (314) which defines a throughflow opening, a valve plate (320) which can be moved to and from a seat shielding position, spring means (341, 342) which function to bias the valve plate (320) to a closed seat sealing position, and a fluid-driven piston-cylinder unit (330, 323, 324) which functions to lift the valve plate (320) against the force of the spring means (341, 342) when activated, said unit including a cylinder (323, 350) which houses a piston (330) which is firmly connected to a rod (313), **characterized** in that the rod (313) extends through the valve plate (320) and is fixedly mounted;in that the valve plate (320) is sealingly connected with the cylinder mantle; in that the spring means (341, 342) acts between the valve plate (320) and the piston firmly connected to the rod (313) of the piston-cylinder unit; and in that the valve is located inside the tank.

2. A bottom valve according to Claim 1, **characterized** in that balancing of the valve is achieved by virtue of a through-penetrating opening (317) in the valve plate (320) in the region thereof that is exposed to the throughflow opening in the valve seat; and in that the cross-sectional area of the space between the piston (330) and the valve plate (320) and defined by the mantle and the rod (313) of said unit is greater than the area of the valve plate exposed to the throughflow opening of the seat (31) in the closed state of the valve (3).

3. A bottom valve according to Claim 1 or Claim 2, **characterized** in that the movable cylinder (323, 324) carries a generally vertical guide (71) which accommodates a guide stem (61) on a float (6); in that means (62, 72) are provided for limiting downward movement of the float (6) in relation to the guide (71); in that the float is arranged to accompany the liquid level of the tank down to the tank bottom; and in that a sensor is provided for detecting the proximity of the float as an indication that the tank is empty.

4. A bottom valve according to Claim 3, **characterized** in that said limiting means (62, 72) is arranged so that the float (60, 63) will not actuate the sensor (64) until the valve is closed and the sensor (64) therewith detects the presence of the float (60, 63).

5. A bottom valve according to Claim 3, **characterized** in that the limiting means (62, 72b) functions to enable the float (60, 63) to actuate the sensor (64) when the tank is empty, both when the valve (3) is open and when the valve (3) is closed.

6. A bottom valve according to Claim 4 or Claim 5, **characterized** in that the limiting means (72, 62) includes a stop formed by the upper end (72) of the guide (71), and an abutment (62) on the float stem (61) coacting with said stop, wherein the abutment (62) may be adjusted positionally to provide a correct setting.

7. A bottom valve according to any one of Claims 1 to 6, **characterized** in that the unit is driven by compressed air and is constructed to operate correctly with an air pressure corresponding to a fraction, for instance half, of the standard pressure of the compressed-air system of the truck; in that a pressure reduction valve (366) is connected between the unit (350) and the compressed-air source (9); and in that a shunt (363, 364, 365) is provided to enable the standard pressure of the compressed-air system to be applied directly to the unit (350) so as to forcibly open the valve.

8. A bottom valve according to Claim 2, **characterized** by a safety valve (370) which is constructed to open at a specific pressure limit, wherein the safety valve is fitted through the wall of the cylinder (323) in a position which enables an overpressure to be relieved through the throughflow opening of the valve seat, through the opening (317) in the valve plate and through the safety valve (370) and into the interior of the tank (1) when the valve plate (320) seals against the valve seat (314).
